**Europäisches Patentamt**

**European Patent Office**

**Office européen des brevets**

(19)

(11) Veröffentlichungsnummer : **0 211 802**
**B1**

(12) # EUROPÄISCHE PATENTSCHRIFT

(45) Veröffentlichungstag der Patentschrift :
28.09.88

(51) Int. Cl.⁴ : **F 16 B 13/06**

(21) Anmeldenummer : **86810264.1**

(22) Anmeldetag : **13.06.86**

(54) Ankerhülse.

(30) Priorität : **29.07.85 DE 3527092**

(43) Veröffentlichungstag der Anmeldung :
**25.02.87 Patentblatt 87/09**

(45) Bekanntmachung des Hinweises auf die Patenterteilung : **28.09.88 Patentblatt 88/39**

(84) Benannte Vertragsstaaten :
**AT CH DE FR GB LI**

(56) Entgegenhaltungen :
**DE-U- 6 600 504**
**DE-U- 6 946 947**
**FR-A-   537 592**
**FR-A- 2 330 902**
**FR-A- 2 370 189**
**US-A- 1 599 784**
**US-A- 1 972 715**

(73) Patentinhaber : **HILTI Aktiengesellschaft**
**FL-9494 Schaan (LI)**

(72) Erfinder : **Schiefer, Erwin**
**Guardinistrasse 138/8**
**D-8000 München 70 (DE)**

(74) Vertreter : **Wildi, Roland**
**Hilti Aktiengesellschaft Patentabteilung**
**FL-9494 Schaan (LI)**

## Beschreibung

Die Erfindung betrifft eine Ankerhülse mit einer Angriffsmittel für einen Ankerbolzen aufweisenden Sacklochbohrung.

Bekannte Ankerhülsen gemäss DE-A1-3 329 047 sind in Aufnahmebohrungen eines Untergrundes verankerbar und dienen dem Befestigen von Ankerbolzen, wozu die Ankerhülsen Angriffsmittel, beispielsweise als Innengewinde ausgebildet, aufweisen. Durch eine von einem Spreizkörper einseitig verschlossene, das Gewinde aufweisende Zentralbohrung wird eine sich entlang einem Teil der Länge der Ankerhülse erstreckende Sacklochbohrung gebildet.

Die Herstellung der Ankerhülse mit zugehörigem Spreizkörper ist sehr kostenaufwendig. Ferner besteht das Problem des Verlierens des Spreizkörpers, sei es bereits im Verpackungsstadium oder später am Einsatzort.

Der Erfindung liegt die Aufgabe zugrunde, eine Ankerhülse für Ankerbolzen zu schaffen, die sich durch einfache und kostengünstige Herstellbarkeit auszeichnet, wobei auch die Gefahr des Verlustes von Teilen nicht besteht.

Erfindungsgemäss ist die Aufgabe durch die kennzeichnenden Merkmale des Anspruchs 1 gelöst.

Ausgehend von einem zylindrischen Vollkörper, in den vom einen Stirnende her eine Sacklochbohrung angebracht ist, lässt sich durch die aufgezeigte Anbringung von Längsschlitzen eine Segmentierung des von der Sacklochbohrung nicht durchsetzten Bereichs erzielen, so dass sich in dessen Innerem ein pyramidenförmiger Spreizkörper bildet, der je nach Wahl der Schlitzneigung, — tiefe und — länge über mehr oder weniger starke, als Sollbruchstellen wirkende Materialreste mit dem verbleibenden Teil der Ankerhülse verbunden ist. Der Boden der Sacklochbohrung bildet damit die Bodenfläche des so entstandenen pyramidenförmigen Spreizkörpers.

Zum Festlegen der Ankerhülse in einer Aufnahmebohrung wird mittels eines bolzenförmigen Werkzeugs unter Schlageinwirkung auf den Boden des Spreizkörpers dieser unter Zerstörung der Sollbruchstellen vom verbleibenden Teil der Ankerhülse getrennt und in Einführrichtung der Ankerhülse getrieben. Die Wandung des Spreizkörpers läuft dabei an den durch die Längsschlitze gebildeten geneigten Innenflächen der fingerartigen Segmente auf und presst diese gegen die Wandung der Aufnahmebohrung.

Mit Vorteil sind die Längsschlitze unter einem Winkel von 5° bis 20°, vorzugsweise 7° bis 12°, zur Hülsenachse geneigt. Während für härtere Untergründe eher die kleineren Winkel des angegebenen Neigungsbereichs geeignet sind, empfehlen sich für weichere Untergründe die grösseren Winkel. Der angegebene Neigungsbereich erlaubt bei kleinen Vortriebskräften des Spreizkörpers eine hohe Spreizwirkung und damit hohe Verankerungswerte.

Zweckmässigerweise sind drei sich entlang des von der Sacklochbohrung nicht durchsetzten Bereiches sich erstreckende Längsschlitze vorgesehen. In Umfangsrichtung sind die Längsschlitze gleichmässig verteilt. Demgemäss bildet sich ein Spreizkörper mit gleichseitigem dreieckigem Querschnitt.

Bevorzugt schneiden sich die Schlitzebenen der Längsschlitze in axialer Richtung innerhalb des von der Sacklochbohrung nicht durchsetzten Bereichs. Der verjüngte Auslauf des so gebildeten pyramidenförmigen Spreizkörpers kommt versenkt zu dem von der Sacklochbohrung abgewandten Ende der Ankerhülse zu liegen. Dies hat den Vorteil, dass die Ankerhülse bis zum Auflaufen am Grund einer Aufnahmebohrung eingeschoben und anschliessend sich der Spreizkörper ohne Behinderung durch den Grund der Aufnahmebohrung für den Spreizvorgang verschieben lässt.

Nach einem weiteren Vorschlag der Erfindung schneiden sich die Schlitzebenen der Längsschlitze in axialer Richtung ausserhalb des von der Sacklochbohrung abgewandten Endes des von der Sacklochbohrung nicht durchsetzten Bereichs. Insbesondere in Kombination mit geringer Neigung der Längsschlitze lässt sich so eine annähernd vollständige Beibehaltung der Ausgangsfläche des Aussenumfangs der Ankerhülse erzielen, was wiederum zu hohen Verankerungswerten beiträgt. Ein ungehindertes Verschieben des Spreizkörpers in Spreizposition wird bei dieser Ausführungsform vorzugsweise erreicht, indem sich von dem von der Sacklochbohrung abgewandten Ende ausgehend eine Bohrung über einen Teil des von der Sachlochbohrung nicht durchsetzten Bereichs erstreckt. Durch die Bohrung wird das verjüngte Ende des Spreizkörpers in das Innere des von der Sacklochbohrung nicht durchsetzten Bereichs verlegt, so dass der Spreizkörper nach dem Zerstören der Sollbruchstellen für den Spreizvorgang einen axialen Freiweg besitzt.

Die Erfindung wird nachstehend anhand einer Zeichnung, die Ausführungsbeispiele von Ankerhülsen wiedergibt, näher erläutert. Es zeigen :

Fig. 1 eine Ankerhülse, in Ansicht ;

Fig. 2 die Ankerhülse nach Fig. 1 im Grundriss ;

Fig. 3 einen Schnitt durch die Ankerhülse nach Fig. 1, gemäss Schnittverlauf III-III ;

Fig. 4 eine weitere Ausführungsform einer Ankerhülse, teilweise geschnitten ;

Fig. 5 einen Grundriss der Ankerhülse nach Fig. 4 ;

Fig. 6 einen Schnitt durch die Ankerhülse nach Fig. 4, gemäss Schnittverlauf VI-VI ;

Fig. 7 eine weitere Ausführungsform einer Ankerhülse, teilweise geschnitten ;

Fig. 8 einen Grundriss der Ankerhülse nach Fig. 7 ;

Fig. 9 einen Schnitt durch die Ankerhülse nach Fig. 7, gemäss Schnittverlauf IX-IX.

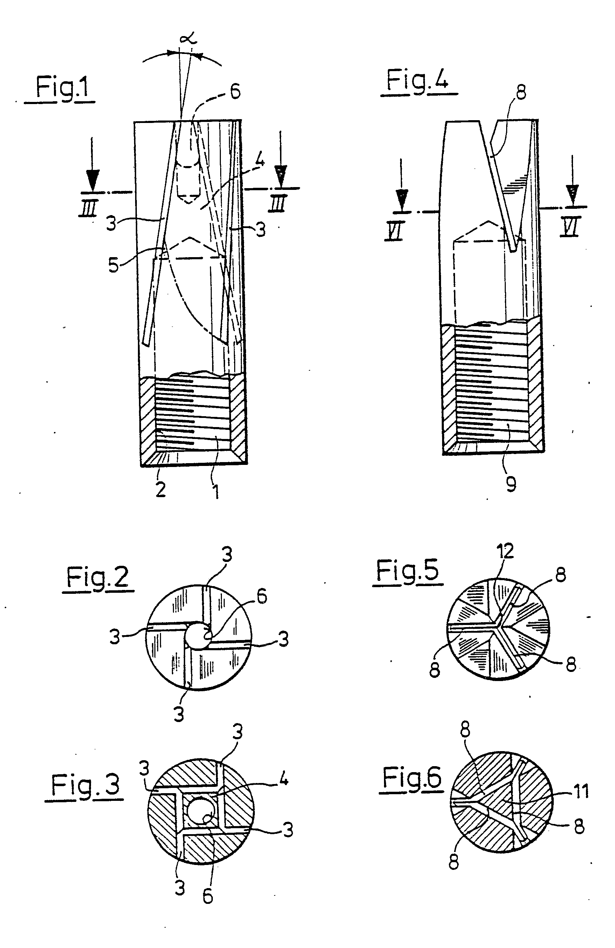

Die Ankerhülse nach Fig. 1 ist im wesentlichen zylindrisch ausgebildet. Vom einen Ende der Ankerhülse her erstreckt sich eine zentrische Sacklochbohrung 1, die mit einem Innengewinde 2 als Angriffsmittel für einen Ankerbolzen versehen ist. Vom gegenüberliegenden Ende der Ankerhülse ausgehend durchsetzen vier Längsschlitze 3 die Ankerhülse radial und axial teilweise.

Die Längsschlitze 3 enden axial im Bodenbereich der Sacklochbohrung 1. In radialer Richtung laufen die Längsschlitze 3 zumindest über einen Teil ihrer Länge ineinander über. Das Neigen der Längsschlitze 3 um einen Winkel α von etwa 10° zur Hülsenachse schafft durch Anbringen der Längsschlitze 3 in dem von der Sacklochbohrung nicht durchsetzten Bereich einen pyramidenförmigen Spreizkörper 4. Der Spreizkörper 4 steht über Sollbruchstellen 5, die aus stehengebliebenen Restquerschnitten zwischen den Längsschlitzen 3 und der Sacklochbohrung 1 gebildet sind, mit den übrigen Teilen der Ankerhülse in Verbindung. Die Kontur des Spreizkörpers 4 verjüngt sich zu dem von der Sacklochbohrung 1 abgewandten Ende hin und ist gegenüber diesem Ende zurückversetzt. Die Zurückversetzung wird durch eine zentrische Bohrung 6 geschaffen, die, wie insbesondere die Fig. 2 zeigt, den durch den Auslauf der Längsschlitze 3 entstehenden freien Endbereich des Spreizkörpers 4 entfernt.

Zum Festlegen der Ankerhülse in einer Aufnahmebohrung wird durch Schlageinwirkung auf den Boden der Sacklochbohrung 1 der Spreizkörper 4 unter vorheriger Zerstörung der Sollbruchstellen 5 entlang der Längsschlitze 3 verschoben. Zufolge der Neigung der Längsschlitze 3 und der Aussenkontur des Spreizkörpers 4 kommt es dabei zur Verspreizung in der Aufnahmebohrung.

Bei der Ankerhülse nach Fig. 1 sind die Längsschlitze 3 radial aus dem Zentrum der Ankerhülse gerückt, so dass sich deren Schlitzebenen in axialer Richtung ausserhalb der Ankerhülse schneiden, weshalb sich der Spreizkörper 4 bis zu dem von der Sacklochbohrung 1 abgewandten Ende erstrecken würde. Demgegenüber schneiden sich bei der Ankerhülse nach Fig. 4 die drei Längsschlitze 8 in axialer Richtung innerhalb des von einer Sacklochbohrung 9 nicht durchsetzten Bereichs. Auch hier entsteht durch Anbringen der Längsschlitze 8 eine pyramidenförmiger Spreizkörper 11. Dieser ist wiederum in dessen Bodenbereich durch nicht näher dargestellte Sollbruchstellen mit den anderen Teilen der Ankerhülse verbunden. Das freie spitze Ende 12 des Spreizkörpers 11 ist gegenüber dem von der Sacklochbohrung 9 abgewandten Ende der Ankerhülse zurückversetzt, wodurch ein Verschieben des Spreizkörpers 11 in Spreizstellung möglich ist.

In Abweichung zur Ankerhülse nach den Fig. 1 bis 3 sind bei der Ankerhülse nach den Fig. 4 bis 6 die Längsschlitze 8 in radialer Richtung durchgehend ausgeführt.

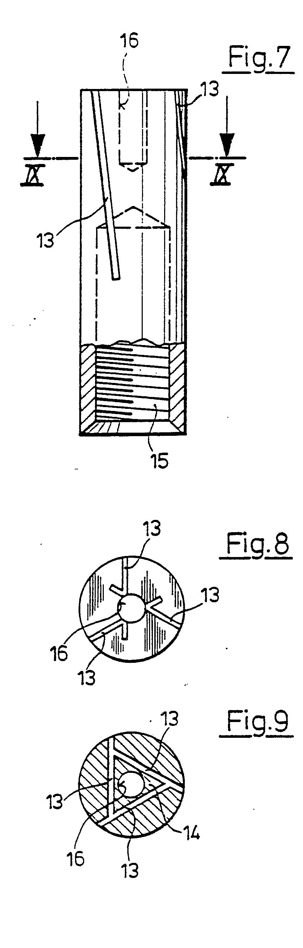

Die Fig. 7 bis 9 zeigen eine Ankerhülse mit drei Längsschlitzen 13, deren Schlitzebenen, analog der Ausführungsform nach Fig. 1, sich in axialer Richtung ausserhalb der Ankerhülse schneiden.

Ein pyramidenförmiger Spreizkörper 14 mit dreieckigem Querschnitt erstreckt sich vom Boden der Sacklochbohrung 15 bis zum Boden einer dieser gegenüberliegenden zentrisch angeordneten Bohrung 16.

## Patentansprüche

1. Ankerhülse mit einer Angriffsmittel (2) für einen Ankerbolzen aufweisenden Sacklochbohrung (1, 9, 15), gekennzeichnet durch wenigstens drei von der Sacklochbohrung (1, 9, 15) abgewandten Ende ausgehenden Längsschlitzen (3, 8, 13), die sich im wesentlichen entlang des von der Sacklochbohrung (1, 9, 15) nicht durchsetzten Bereiches erstrecken, zur Hülsenachse geneigt sind und sich in axialer sowie in radialer Richtung schneidende Schlitzebenen aufweisen, wobei jeder Längsschlitz (3, 8, 13) radial von aussen sich bis wenigstens zur Schlitzebene eines der Hülsenachse gegenüberliegenden Längsschlitzes erstreckt, derart dass aus den stehengebliebenen Restquerschnitten zwischen den Längsschlitzen (3, 8, 13) und der Sacklochbohrung (1, 9, 15) ein über Sollbruchstellen mit den übrigen Teilen der Ankerhülse verbundener, sich zu dem der Sacklochbohrung (1, 9, 15) abgewandten Ende hin verjüngender Spreizkörper gebildet wird.

2. Ankerhülse nach Anspruch 1, dadurch gekennzeichnet, dass die Längsschlitze (3, 8, 13) unter einem Winkel (α) von 5° bis 20°, vorzugsweise 7° bis 12°, zur Hülsenachse geneigt sind.

3. Ankerhülse nach Anspruch 1 oder 2, dadurch gekennzeichnet, dass drei sich entlang des von der Sacklochbohrung (15) nicht durchsetzten Bereiches sich erstreckende Längsschlitze (13) vorgesehen sind.

4. Ankerhülse nach einem der Ansprüche 1 bis 3, dadurch gekennzeichnet, dass sich die Schlitzebenen der Längsschlitze (8) in axialer Richtung innerhalb des von der Sacklochbohrung (9) nicht durchsetzten Bereichs schneiden.

5. Ankerhülse nach einem der Ansprüche 1 bis 3, dadurch gekennzeichnet, dass sich die Schlitzebenen der Längsschlitze (3, 13) in axialer Richtung ausserhalb des von der Sacklochbohrung (1, 15) abgewandten Endes des von der Sacklochbohrung (1, 15) nicht durchsetzten Bereichs schneiden.

6. Ankerhülse nach einem der Ansprüche 1 bis 5, dadurch gekennzeichnet, dass sich von dem von der Sacklochbohrung (1, 15) abgewandten Ende ausgehend eine Bohrung (6, 16) über einen Teil des von der Sacklochbohrung (1, 15) nicht durchsetzten Bereichs erstreckt.

## Claims

1. An anchoring sleeve having a blind-hole bore (1, 9, 15) having engaging means (2) for an anchor bolt, characterised by at least three elongate slots (3, 8, 13) which emanate from the end remote from the blind-hole bore (1, 9, 15) and which extend substantially along the region not penetrated by the blind-hole bore (1, 9, 15), are inclined with regard to the sleeve axis and have slot planes which intersect in the axial as well as in the radial direction, in which respect each elongate slot (3, 8, 13) from the outside extends radially at least as far as to the slot plane of an elongate slot lying opposite to the sleeve axis, in such a way that from the residual cross-sections which have remained between the elongate slots (3, 8, 13) and the blind-hole bore (1, 9, 15) there is formed an expansion body which is connected by way of predetermined breaking points to the remaining parts of the dowel sleeve and which narrows towards the end remote from the blind-hole bore (1, 9, 15).

2. An anchoring sleeve according to claim 1, characterised in that the elongate slots (3, 8, 13) are inclined at an angle ($\alpha$) of 5° to 20°, preferably 7° to 12°, with regard to the sleeve axis.

3. An anchoring sleeve according to claim 1 or 2, characterised in that three elongate slots (13) are provided extending along the region not penetrated by the blind-hole bore (15).

4. An anchoring sleeve according to one of claims 1 to 3, characterised in that the slot planes of the elongate slots (8) intersect in the axial direction within the region not penetrated by the blind-hole bore (9).

5. An anchoring sleeve according to one of claims 1 to 3, characterised in that the slot planes of the elongate slots (3, 13) intersect in the axial direction outside the end, remote from the blind-hole (1, 15), of the region not penetrated by the blind-hole bore (1, 15).

6. An anchoring sleeve according to one of claims 1 to 5, characterised in that, emanating from the end remote from the blind-hole bore (1, 15), a bore (6, 16) extends over a part of the region not penetrated by the blind-hole bore (1, 15).

**Revendications**

1. Douille d'ancrage avec un trou borgne (1, 9, 15) présentant des moyens d'application (2) pour un boulon d'ancrage, caractérisée en ce qu'elle comprend au moins trois fentes longitudinales (3, 8, 13) partant de l'extrémité opposée au trou borgne (1, 9, 15) qui s'étendent sensiblement le long de la section non traversée par le trou borgne (1, 9, 15), sont inclinées par rapport à l'axe de la douille et présentent des plans de fentes se coupant dans le sens radial, chaque fente longitudinale (3, 8, 13) s'étendant radialement de l'extérieur au moins jusqu'au plan de fente d'une fente longitudinale disposée en face de l'axe de la douille de façon à constituer, à partir des sections résiduelles conservées entre les fentes longitudinales (3, 8, 13) et le trou borgne (1, 9, 15), un corps d'écartement rattaché par l'intermédiaire de points de rupture imposée aux autres parties de la douille d'ancrage et diminuant en direction de l'extrémité opposée au trou borgne (1, 9, 15).

2. Douille d'ancrage selon la revendication 1, caractérisée en ce que les fentes longitudinales (3, 8, 13) sont inclinées par rapport à l'axe de la douille sous un angle ($\alpha$) de 5° à 20°, de préférence de 7° à 12°.

3. Douille d'ancrage selon l'une des revendications 1 ou 2, caractérisée en ce qu'elle comprend trois fentes longitudinales (13) qui s'étendent le long de la section non traversée par le trou borgne (15).

4. Douille d'ancrage selon l'une quelconque des revendications 1 à 3, caractérisée en ce que les plans des fentes longitudinales (8) se coupent, dans le sens axial, à l'intérieur de la section non traversée par le trou borgne (9).

5. Douille d'ancrage selon l'une quelconque des revendications 1 à 3, caractérisée en ce que les plans des fentes longitudinales (3, 13) se coupent, dans le sens axial, à l'extérieur de l'extrémité de la section non traversée par le trou borgne (1, 15), opposée au trou borgne (1, 15).

6. Douille d'ancrage selon l'une quelconque des revendications 1 à 5, caractérisée en ce que, en partant de l'extrémité opposée au trou borgne (1, 15), un alésage (6, 16) s'étend sur une partie de la section non traversée par le trou borgne (1, 15).

0 211 802

Fig.1

Fig.4

Fig.2

Fig.5

Fig.3

Fig.6

Fig. 7

Fig. 8

Fig. 9